# EUROPEAN PATENT APPLICATION

(11) **EP 1 557 829 A2**
(43) Date of publication of application: **27.07.2005**
(21) Application number: 05001116.2
(22) Date of filing: 20.01.2005
(51) Int. Cl.: G11B 7/135

(54) **Optical pickup and recording/reproducing apparatus**

(30) Priority: 23.01.2004 JP 2004015884
(71) Applicant: Pioneer Corporation, Meguro-ku, Tokyo (JP)
(72) Inventor: Sato, Makoto c/o Pioneer Corporation, Tsurugashima-shi Saitama (JP); Ogasawara, Masakazu c/o Pioneer Corporation, Tsurugashima-shi Saitama (JP)
(74) Representative: Reinhard - Skuhra - Weise & Partner GbR

(57) **Abstract**

A combination of an object lens (6) designed to appropriately converge a light beam L3 on a recording surface of a Blu-ray Disc, and an optical element (8) which gives a phase difference distribution to a light beam L2 but does not give a phase difference distribution to the light beam L3, is provided. Another combination of an object lens (7) designed to appropriately converge the light beam L3 on a recording surface of another optical disc, and an optical element (9) which gives a phase difference distribution to a light beam L1 but does not give a phase difference distribution to the light beam L3, is provided. By the two combinations, information is recorded or reproduced, with respect to four types of recording media (2), which is a CD, a DVD, the Blu-ray Disc, and said another optical disc.

## Description

### BACKGROUND OF THE INVENTION

### 1. Field of the Invention

The present invention relates to an optical pickup for recording or reproducing information with respect to a recording medium, such as an optical disk, as well as a recording / reproducing apparatus.

### 2. Description of the Related Art

As recording media for recording information, a CD (Compact Disc) and a DVD are now widespread. Moreover, there is widespread a recording apparatus or a reproducing apparatus which can record or reproduce the information with respect to both the CD and the DVD. Such an apparatus is generically referred to as a "multi drive".

The multi drive, as in a general disc drive, has an optical pickup provided with an optical system, which includes a semiconductor laser, a collimator lens, an object lens, and the like. In the CD and the DVD, there are differences in the wavelength of a light beam, the numerical aperture (NA) of the object lens, the thickness of a cover layer (or substrate), and the like. Thus, in order to realize the record or reproduction of the information with respect to both the CD and the DVD, it is necessary to individually establish an optical system for the CD and an optical system for the DVD. In many of the currently widespread multi drives, however, it is tried to combine the two types of optical systems by unifying members which can be shared for the both optical systems for the CD and the DVD as many as possible, in order to reduce the size, weight, and number of parts of the multi drive.

There is a multi drive, out of the above-described multi drives, which uses a compatible object lens unit, which can be used for both the CD and the DVD. For example, the compatible object lens unit is provided with: an object lens; and an optical element. The object lens is designed not to cause spherical aberration, mainly in irradiating a recording surface of the DVD with a light beam for the DVD. The optical element is unified with the object lens, and placed in the middle of an optical path of the light beam as well as the object lens. The optical element is designed not to generate a phase difference distribution with respect to the light beam for the DVD but to generate a phase difference distribution with respect to a light beam for the CD. Specifically, a plurality of circular steps are formed on a surface of the optical element, and the size of each step is designed to generate an optical path difference which is an integral multiple of the wavelength of the light beam for the DVD. Moreover, the plurality of steps are designed to generate the phase difference distribution in the light beam for the CD, to thereby appropriately correct spherical aberration caused when the light beam for the CD reaches to the recording surface of the CD only through the object lens designed for the DVD.

The compatible object lens unit basically has a function of selecting either one of the two types of light beams by using the fact that the two types of light beams have mutually different wavelengths, and a function of performing a particular optical treatment with respect to the selected type of light beam. There are some other known compatible object lens units or compatible object lenses having such a function. For example, an compatible object lens described in Japanese Patent Application Laying Open NO. 1999-287948 realizes the above-described function by forming a concavo-convex shape on a surface of the object lens itself. Moreover, an optical system described in Japanese Patent Application Laying Open NO. Hei 09-128785 realizes the above-described function by using a liquid crystal panel.

In the meanwhile, next-generation recording media following the DVD have been now developed. For example, a Blu-ray Disc has been already being marketed as the next-generation recording media. Moreover, a High Definition-DVD (HD-DVD) will be marketed soon as the next-generation recording media. Furthermore, some types of next-generation recording media are under development. According to the circumstances of development of such next-generation recording media, it is expected to market a plurality of types of next-generation recording media having individual different standards, in the near future. For example, in comparing the Blu-ray Disc standard and the HD-DVD standard, the both standards have a common point in using a blue laser with a wavelength of approximately 405 nm, but have a different point in the thickness of the cover layer (or substrate).

In the case where these next-generation recording media are widespread, if one multi drive can record or reproduce the information, with respect to not only the CD and the DVD, but also the next-generation recording media, that is useful. In order to realize this, it is desirable to unify the optical system for the CD, the optical system for the DVD, an optical system for the Blu-ray Disc, and an optical system for the HD-DVD, for example. It is also desirable to (i) select a light beam with an appropriate wavelength, depending on the type of the recording medium on which the information is to be recorded and reproduced, (ii) perform an appropriate optical treatment with respect to the selected light beam, and (iii) correct spherical aberration caused by the difference in the thickness of the cover layer among the recording media.

However, the above-described compatible object lens unit or compatible object lens selects a particular light beam, by using the fact that a plurality of types of light beams have mutually different wavelengths, and performs a certain optical treatment with respect to the selected light beam. If the wavelengths of light beams for a plurality of recording media are the same as each other, this compatible object lens unit or compatible object lens cannot select a particular light beam. The wavelength of a light beam for the Blu-ray Disc is equal to that of a light beam for the HD-DVD. Therefore, the compatible object lens unit or compatible object lens cannot select a particular light beam from between the light beam for the Blu-ray Disc and the light beam for the HD-DVD. Hence, it is hardly possible to correct spherical aberration caused on both the Blu-ray Disc and the HD-DVD, by using one compatible object lens unit or compatible object lens.

As described above, if several types of recording media include two or more types of recording media which have different optical properties such as different thicknesses of cover layers while the light beams to be used for them have the same wavelength, it is hardly possible to realize the multi drive or an optical pickup for the multi drive, by using only one compatible object lens unit or compatible object lens.

On the other hand, if it is desired to use one multi drive in order to realize the record and reproduction of the information with respect to four or more types of recording media, such as the CD, the DVD, the Blu-ray Disc, and the HD-DVD, as described above, it is desirable to unify the four or more types of optical systems, depending on the types of the recording media. However, the unification of the four or more types of optical systems may increase the size of the multi drive or the size of the optical pickup for the multi drive, greatly increase the number of parts, or reduce record and reproduction abilities of the information with respect to the individual recording media.

### SUMMARY OF THE INVENTION

It is therefore a first object of the present invention to provide an optical pickup and a recording / reproducing apparatus, in which it is possible to appropriately record or reproduce the information with respect to various recording media, even if several types of recording media include two or more types of recording media which have different optical properties such as different thicknesses of cover layers while the light beams to be used for them have the same wavelength.

It is a second object of the present invention to provide an optical pickup and a recording / reproducing apparatus, in which it is possible to record or reproduce the information with respect to four or more types of recording media while reducing the size, weight, and number of parts of the multi drive or improving the record and reproduction abilities of the information with respect to the individual recording media.

The above-described objects can be achieved by an optical pickup of the present invention. The optical pickup of the present invention is an optical pickup for reproducing and recording information with respect to a plurality of types of recording media. The optical pickup of the present invention is provided with: a first light source for outputting a first light beam of a first wavelength; a second light source for outputting a second light beam of a second wavelength; a third light source for outputting a third light beam of a third wavelength; a first object lens and a second object lens, having mutually different optical properties; a first optical element, unified with the first object lens, for transmitting either one of the first light beam and the third light beam without changing its optical property, and changing the other's optical property; and a second optical element, unified with the second object lens, for transmitting either one of the second light beam and the third light beam without changing its optical property, and changing the other's optical property.

The above-described objects can be achieved by a recording / reproducing apparatus of the present invention. The recording / reproducing apparatus of the present invention is an apparatus for reproducing or recording information with respect to a plurality of types of recording media. The recording / reproducing apparatus includes the above-described optical pickup of the present invention.

### BRIEF DESCRIPTION OF THE DRAWINGS

FIG. 1 is an explanatory diagram showing an optical pickup with a recording medium in an embodiment of the present invention;
FIG. 2 is a cross sectional view showing an object lens, an optical element, and a support member shown in FIG. 1;
FIG. 3 is a cross sectional view showing an object lens with an optical element formed on the surface;
FIG. 4 is a cross sectional view showing magnified steps formed on the optical element shown in FIG. 2;
FIG. 5 is a block diagram showing a multi disk player in an example of the present invention; and
FIG. 6 is an explanatory diagram showing the inside of an optical pickup shown in FIG. 5.

### DETAILED DESCRIPTION OF THE PREFERRED EMBODIMENT

An embodiment of the present invention will be explained with reference to the drawings. Incidentally, the content of the drawings used in the embodiment of the present invention embodies constituent elements of the present invention or the like as long as it explains the technological idea of the present invention. The shapes, sizes, positions, and connection relationships of the constitutional elements or the like are not limited to the embodiment. A more specific example to implement the present invention will be disclosed in a section of "Example".

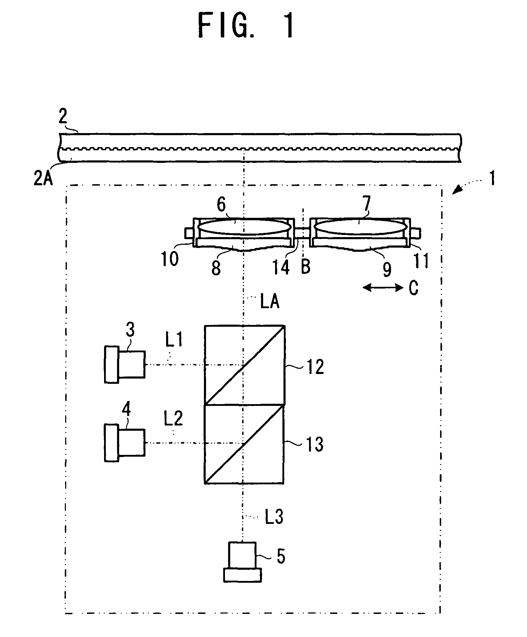

FIG. 1 shows an optical pickup with a recording medium in the embodiment of the present invention. In FIG. 1, an optical pickup 1 reproduces or records information with respect to a plurality of types of recording media (2). There is no limitation in the types of the recording media on which the information can be recorded or reproduced by the optical pickup of the present invention. Since it is required to selectively record and reproduce the information by using one optical pickup, a certain degree of commonness is required for the plurality of types of recording media. For example, it is required that the recording media is optical recording media in which recording or reproduction of information is carried out by an optical device, that there is identity or similarity in the external shape of the recording media, and the like. Moreover, there is not any particular limitation in the number of types of the recording media on which the information can be recorded or reproduced by the optical pickup of the present invention. However, for convenience of explanation, illustrated as the embodiment of the present invention is the optical pickup 1 which can record or reproduce the information with respect to four types in total of the recording media, which are the CD, the DVD, the Blu-ray Disc, and the HD-DVD.

Now, the CD, the DVD, the Blu-ray Disc, and the HD-DVD will be explained. In the CD, the wavelength of a light beam used for the CD is 780 nm, the numerical aperture (NA) to be set for an object lens is 0.45, the thickness of a cover layer (2A) is 1.2 mm, and its track pitch is 1.6 µm. In the DVD, the wavelength of a light beam used for the DVD is 650 nm, the NA to be set for an object lens is 0.6, the thickness of a cover layer is 0.6 mm, and its track pitch is 0.74 µm. In the Blu-ray Disc, the wavelength of a light beam used for the Blu-ray Disc is 405 nm, the NA to be set for an object lens is 0.85, the thickness of a cover layer is 0.1 mm, and its track pitch is 0.32 µm. The wavelength of the light beam, the NA, the thickness of the cover layer and the track pitch with respect to these recording media are determined as the standard. On the other hand, in the HD-DVD, the wavelength of a light beam used for the HD-DVD is 405 nm, the NA to be set for an object lens is 0.6, the thickness of a cover layer is 0.65 mm, and its track pitch is 0.34 µm. Comparing the Blu-ray Disc and the HD-DVD, the wavelengths of the light beams are equal. However, the thicknesses of their cover layers are mutually different.

As shown in FIG. 1, the optical pickup 1 is provided with: a light source 3 for outputting a light beam L1 of a wavelength of 780 nm; a light source 4 for outputting a light beam L2 of a wavelength of 650 nm; and a light source 5 for outputting a light beam L3 of a wavelength of 405 nm. Incidentally, in the optical pickup 1 shown in FIG. 1, there are four types of recording media that are record and reproduction objects, however, there are three types of wavelengths in the light beam used for these recording media. Thus, the optical pickup 1 is provided with the three light sources 3, 4, and 5. However, the number of light sources may be equal to or greater than four, in the optical pickup of the present invention. Namely, if there are five or more types of recording media that are record and reproduction objects and there are four or more types of wavelengths in the light beam, it is possible to increase the number of light sources, depending on the number of light beams used.

Moreover, the optical pickup 1 is provided with object lenses 6 and 7 which have mutually different optical properties. For the object lens 6, such an optical property that is appropriate for record or reproduction of the information with respect to the Blu-ray Disc by using the light beam L3 is set. Specifically, the optical property of the object lens 6 is set not to cause spherical aberration when the light beam L3 is converged on a recording surface of the Blu-ray Disc by the object lens 6. On the other hand, for the object lens 7, such an optical property that is appropriate for record or reproduction of the information with respect to the HD-DVD by using the light beam L3 is set. Specifically, the optical property of the object lens 7 is set not to cause spherical aberration when the light beam L3 is converged on a recording surface of the HD-DVD by the object lens 7. Incidentally, in the optical pickup 1, the above-described optical properties are set for the object lenses 6 and 7, however, the present invention is not limited to this embodiment. The optical properties to be set for the two object lenses can be set in accordance with the types and combination of the recording media on which the information is to be recorded or reproduced by using the optical pickup.

Moreover, the optical pickup 1 is provided with optical elements 8 and 9. The optical element 8 is unified with the object lens 6, and has such an optical property that a phase difference distribution is given to the light beam L2 but not to given to the light beam L3. On the other hand, the optical element 9 is unified with the object lens 7, and has such an optical property that a phase difference distribution is given to the light beam L1 but not to given to the light beam L3. Incidentally, in the optical pickup 1, the above-described optical properties are set for the optical elements 8 and 9, however, the present invention is not limited to this embodiment. For example, for the optical element 8, it is possible to set such an optical property that a phase difference distribution is given to the light beam L3 but not to given to the light beam L2. It is also possible to set such an optical property that phase different distributions, which are mutually different, are given to the both light beams L2 and L3. On the other hand, for the optical element 9, it is possible to set such an optical property that a phase difference distribution is given to the light beam L3 but not to given to the light beam L1. It is also possible to set such an optical property that phase different distributions, which are mutually different, are given to both the light beams L1 and L3. The optical properties of the optical elements 8 and 9 are not limited to such a property that a phase difference distribution is given to a particular light beam, but may be such a property that another optical change is given to a particular light beam. For example, it may be such a property that a part of light is shielded to perform aperture limitation, or that a transmittance distribution is changed for an intensity distribution change.

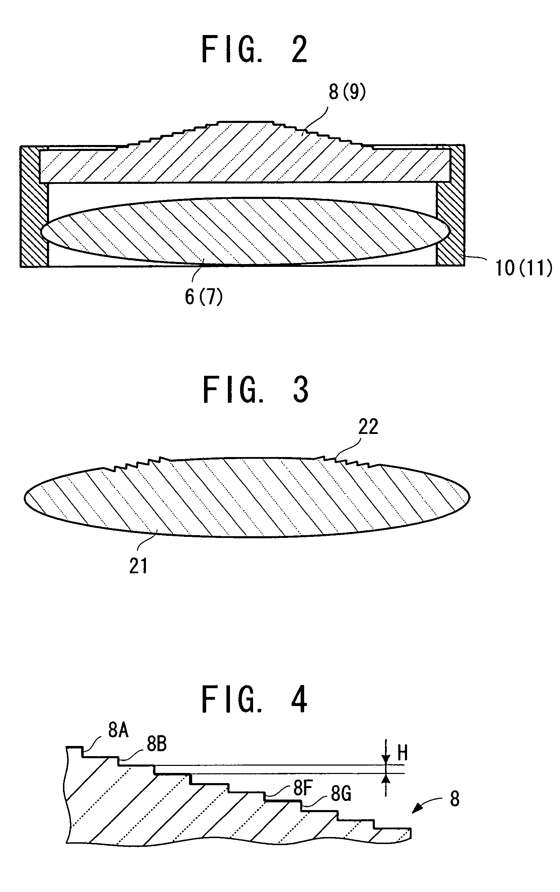

FIG. 2 shows a condition in which the optical element 8 and the object lens 6 are connected by a support member 10. As shown in FIG. 2, the optical element 8 is an optical member different from the object lens 6. The optical element 8 is made of a light transmitting material, such as glass and plastic, for example. The optical element 8 is connected to the object lens 6 via the support member 10. As in the optical element 8, the optical element 9 is an optical member different from the object lens 7, and is made of a light transmitting material, such as glass and plastic, for example. The optical element 9 is connected to the object lens 7 via a support member 11. Incidentally, each optical element in the optical pickup of the present invention is not limited to the structure shown in FIG. 2. For example, as shown in FIG. 3, it is possible to form an optical element 22 on the surface of an object lens 21. Moreover, it is also possible to form an optical element inside an object lens.

FIG. 4 shows magnified one portion of the optical element 8. In the optical element 8, a plurality of steps 8A, 8B, ... are formed. The steps 8A, 8B, ... individually have a circular external shape, and are placed concentrically on the basis of the central portion of the optical element 8 through which the common optical axis LA (cf. FIG. 1) passes. A height H of each step 8A, 8B, .... is set to generate an optical path length difference which is an integral multiple of the wavelength of the light beam L3. Thus, the optical element 8 transmits the light beam L3 without giving a phase difference distribution. Moreover, the height H, other shapes and placement of each step 8A, 8B, ... are designed to give a phase difference distribution to the light beam L2 and correct spherical aberration caused when the light beam L2 is converged on the recording surface of the DVD only by the object lens 6. On the other hand, in the optical element 9, a plurality of steps are formed, as in the optical element 8. A height of each step is set to generate an optical path length difference which is an integral multiple of the wavelength of the light beam L3. Moreover, the height, other shapes and placement of each step of the optical element 9 are designed to give a phase difference distribution to the light beam L1 and correct spherical aberration caused when the light beam L1 is converged on the recording surface of the CD only by the object lens 7. Incidentally, the method of realizing the optical property in each optical element is not limited to the above-described circular steps. The basic function required for the optical element is to select one type of light beam out of two or more types of light beams, by using the fact that the two or more types of light beams have mutually different wavelengths, and to perform a particular optical treatment with respect to the selected type of light beam. If capable of realizing such a function, the method using a hologram in another form, wavelength-selective aperture limitation, a diffraction granting, or the like may be adopted.

Back in FIG. 1, the optical pickup 1 is further provided with dichroic prisms 12 and 13. The dichroic prism 12 reflects the light beam L1 and transmits the light beams L2 and L3. The dichroic prism 13 reflects the light beam L2 and transmits the light beam L3. Namely, the dichroic prisms 12 and 13 are optical axis converting devices for converting the optical axis of each of the light beams L1, L2, and L3 to one common optical axis LA. Incidentally, the optical axis converting device is not limited to the dichroic prism, and various prisms or mirrors can be used.

Moreover, the optical pickup 1 is provided with an object lens changing device 14. The object lens changing device 14 is a changing device for changing the placement of the object lenses 6 and 7 so as to place either the object lens 6 or the object lens 7 at a predetermined position through which the common optical axis LA passes. There are various conceivable specific structures of the changing device. For example, as shown in FIG. 1, it is possible to arrange the object lenses 6 and 7 side by side, mutually connect them, and rotate them around an axis B. Moreover, it is also possible to arrange the object lenses 6 and 7 side by side, mutually connect them, and slide the object lenses 6 and 7 together in a direction of an arrow C.

Incidentally, since the optical element 8 and the object lens 6 are connected with each other and form a single-piece construction, as the object lens 6 is placed by the object lens changing device 14 at a predetermined position through which the common optical axis LA passes, the optical element 8 is also placed at a predetermined position through which the common optical axis LA passes. In the same manner, since the optical element 9 and the object lens 7 are connected with each other and form a single piece construction, as the object lens 7 is placed by the object lens changing device 14 at a predetermined position through which the common optical axis LA passes, the optical element 9 is also placed at a predetermined position through which the common optical axis LA passes.

With reference to FIG. 1, the operation of the optical pickup 1 will be explained below. In recording or reproducing the information with respect to the DVD, the object lens 6 and the optical element 8 are placed by the object lens changing device 14 at predetermined positions through which the common optical axis LA passes. Then, the light source 4 is driven, to output the light beam L2 from the light source 4. By this, the light axis of the light beam L2 is set to the common light axis LA by the dichroic prism 13. The light beam L2 is transmitted through the dichroic prism 12, the optical element 8, and the object lens 6 in order, and reaches to the recording surface of the DVD (the recording medium 2). For the object lens 6, such an optical property that is appropriate for record or reproduction of the information with respect to the Blu-ray Disc by using the light beam L3 is set. Thus, if the light beam L2 is transmitted only through the object lens 6 and reaches to the recording surface of the DVD, spherical aberration occurs on the recording surface of the DVD. However, the light beam L2 is transmitted through the optical element 8 and then the object lens 6, and reaches to the recording surface of the DVD. Thus, a phase difference distribution is given to the light beam L2 by the optical element 8. As a result, the spherical aberration on the recording surface of the DVD is corrected to be in a range appropriate for record or reproduction of the information with respect to the DVD.

Next, in recording or reproducing the information with respect to the Blu-ray Disc, the object lens 6 and the optical element 8 are placed by the object lens changing device 14 at predetermined positions through which the common optical axis LA passes. Then, the light source 5 is driven, to output the light beam L3 from the light source 5. By this, the light beam L3 is transmitted through the dichroic prisms 12 and 13, and consequently, the light axis of the light beam L3 matches the common light axis LA. Then, the light beam L3 is transmitted through the optical element 8 and the object lens 6 in order, and reaches to the recording surface of the Blu-ray Disc (the recording medium 2). The optical element 8 transmits the light beam L3 without giving a phase difference distribution. For the object lens 6, such an optical property that is appropriate for record or reproduction of the information with respect to the Blu-ray Disc by using the light beam L3 is set. As a result, the light beam L3 appropriately converges on the recording surface of the Blu-ray Disc.

Next, in recording or reproducing the information with respect to the CD, the object lens 7 and the optical element 9 are placed by the object lens changing device 14 at predetermined positions through which the common optical axis LA passes. Then, the light source 3 is driven, to output the light beam L1 from the light source 3. By this, the light axis of the light beam L1 is set to the common light axis LA by the dichroic prism 12. The light beam L1 is transmitted through the optical element 9 and the object lens 7 in order, and reaches to the recording surface of the CD (the recording medium 2). For the object lens 7, such an optical property that is appropriate for record or reproduction of the information with respect to the HD-DVD by using the light beam L3 is set. Thus, if the light beam L1 is transmitted only through the object lens 7 and reaches to the recording surface of the CD, spherical aberration occurs on the recording surface of the CD. However, the light beam L1 is transmitted through the optical element 9 and then the object lens 7, and reaches to the recording surface of the CD. Thus, a phase difference distribution is given to the light beam L1 by the optical element 9. As a result, the spherical aberration on the recording surface of the CD is corrected to be in a range appropriate for record or reproduction of the information with respect to the CD.

Next, in recording or reproducing the information with respect to the HD-DVD, the object lens 7 and the optical element 9 are placed by the object lens changing device 14 at predetermined positions through which the common optical axis LA passes. Then, the light source 5 is driven, to output the light beam L3 from the light source 5. By this, the light beam L3 is transmitted through the dichroic prisms 12 and 13, and consequently, the light axis of the light beam L3 matches the common light axis LA. Then, the light beam L3 is transmitted through the optical element 9 and the object lens 7 in order, and reaches to the recording surface of the HD-DVD (the recording medium 2). The optical element 9 transmits the light beam L3 without giving a phase difference distribution. For the object lens 7, such an optical property that is appropriate for record or reproduction of the information with respect to the HD-DVD by using the light beam L3 is set. As a result, the light beam L3 appropriately converges on the recording surface of the HD-DVD.

As described above, according to the optical pickup 1, it is possible to appropriately converge the light beam L2 on the recording surface of the DVD, and appropriately converge the light beam L3 on the recording surface of the Blu-ray Disc, by using the object lens 6 and the optical element 8. Moreover, it is possible to appropriately converge the light beam L1 on the recording surface of the CD, and appropriately converge the light beam L3 on the recording surface of the HD-DVD, by using the object lens 7 and the optical element 9. Then, it is possible to record or reproduce the information with respect to the four types of recording media, by using the three types of light beams, by changing the combination of the object lens 6 and the optical element 8 and the combination of the object lens 7 and the optical element 9.

In general, if one object lens is used to record or reproduce the information with respect to the plurality of types of recording media having different optical properties, such as the wavelength of a light beam and the thickness of a cover layer, an optical element for correcting spherical aberration caused in accordance with the optical property of each recording medium is required. Moreover, in general, this type of optical element is provided with a function of selecting one type of light beam, out of two or more types of light beams, by using the fact that the two or more types of light beams have mutually different wavelengths, and a function of performing a particular optical treatment with respect to the selected type of light beam. However, as in the Blu-ray Disc and the HD-DVD, if the information is recorded or reproduced with respect to the two or more types of recording media which have the cover layers of different thicknesses while the light beams to be used have the same wavelength, it is difficult to correct all of the spherical aberration caused on the recording surface of each recording medium, by using a single optical element. Namely, as in the Blu-ray Disc and the HD-DVD, if the wavelengths of the light beams are equal (405 nm) but the thicknesses of the cover layers are mutually different (0.1 mm, 0.65 mm), the spherical aberration on the recording surface varies in the two types of recording media. Thus, with respect to the light beams, it is necessary to perform different optical treatments for the two types of recording media (i.e. to change the optical property of the light beam between two types of recording media). (Incidentally, "to perform different optical treatments" includes such a case that the optical treatment is performed with respect to the light beam for one type of recording medium, while the optical treatment is not performed with respect to the light beam for the other type of recording medium.) However, since the wavelengths of the light beams are equal, it is hardly possible to perform the different optical treatments with respect to the light beams in the two types of recording media, by using a single optical element.

In this regard, the optical pickup 1 in the embodiment of the present invention is provided with: the two object lenses 6 and 7; and the two optical elements 8 and 9. By this, as in the Blu-ray Disc and the HD DVD, it is possible to perform the optical treatments appropriate for the two ore more types of recording media which have the cover layers of different thicknesses while the light beams to be used have the same wavelength, to thereby realize the record or reproduction of the information.

Moreover, the optical pickup 1 in the embodiment of the present invention can realize the record or reproduction of the information with respect to the four types of recording media, by changing the two object lenses 6 and 7 (and the two optical elements 8 and 9). By this, it is possible to reduce the size, weight, and number of parts of the optical pickup for the multi drive, which can handle the four types of recording media.

Moreover, in the optical pickup 1, in view of the individual wavelengths of the light beams and the individual thicknesses of the cover layers of the CD, the DVD, the Blu-ray Disc, and the HD-DVD, the object lens 6 and the optical element 8 are assigned to the DVD and the Blu-ray Disc, and the object lens 7 and the optical element 9 are assigned to the CD and the HD-DVD. By the assignment method of this type, it is possible to improve the record and reproduction abilities of the information with respect to the individual recording media. The assignment method will be explained in more detail below.

In order to properly prevent the spherical aberration caused on the two types of recording media which have the cover layers of different thicknesses, by using a single optical element and a single object lens, a proper hologram or diffraction granting, such as steps, is formed on the optical element. In this case, as a difference in the thickness of the cover layer between the two types of recording media becomes smaller, it is easier to form the hologram or diffraction granting. For example, as a difference in the thickness of the cover layer between the two types of recording media becomes smaller, it is possible to reduce the height of each step more greatly. Ease to form the hologram or diffraction granting increases reliability of highly accurate correction of spherical aberration. Therefore, in the two types of recording media to be assigned to one optical element, it is desirable that a difference in the thickness of the cover layer between them is small.

In this regard, in view of the thickness of the cover layer among the CD, the DVD, the Blu-ray Disc, and the HD-DVD, a difference in the thickness of the cover layer between the DVD and the Blu-ray Disc is 0.5 mm, which is relatively small. Moreover, a difference in the thickness of the cover layer between the CD and the HD-DVD is 0.55 mm, which is relatively small. On the other hand, a difference in the thickness of the cover layer between the Blu-ray Disc and the CD is 1.1 mm, which is relatively large. Now, the assignment method of assigning the optical elements 8 and 9 is considered so as to satisfy the following two conditions: (1) different optical elements are to be assigned to the Blu-ray Disc and the HD-DVD because the light beams to be used have the same wavelength; and (2) a difference in the thickness of the cover layer is desirably small between two types of recording media which are to be assigned to one optical element. It is desirable, as in the embodiment of the present invention, that the optical element 8 is assigned to the DVD and the Blu-ray Disc and that the optical element 9 is assigned to the CD and the HD-DVD.

Incidentally, the technological idea of the present invention can be embodied as the optical pickup 1 as described above, but can be embodied as a recording / reproducing apparatus equipped with such an optical pickup. Incidentally, the "recording / reproducing apparatus" indicates an apparatus having a function of recording information onto a recording medium, an apparatus having a function of reproducing the information recorded on the recording medium, or an apparatus having a function of recording and reproducing the information with respect to the recording medium.

According to the recording / reproducing apparatus in which the technological idea of the present invention is embodied, it is possible to realize record or reproduction of the information with respect to a plurality of types of recording media by using one recording / reproducing apparatus. Moreover, by using two or more object lenses and two or more optical elements, it is possible to appropriately record or reproduce the information with respect to various recording media, even if several types of recording media that are record objects or reproduction objects include two or more types of recording media which have different optical properties such as different thicknesses of cover layers while the light beams to be used for them have the same wavelength. Since the information can be recorded or reproduced with respect to four or more types of recording media by changing the two ore more object lenses, it is possible to reduce the size, weight, and number of parts of the recording / reproducing apparatus. Moreover, if one optical element is assigned to the DVD and the Blu-ray Disc, and if the other optical element is assigned to the CD and the HD-DVD, it is possible to improve the record and reproduction abilities of the information with respect to the individual recording media.

### EXAMPLE

An example of the present invention will be explained below with reference to the drawings. The following example, in which the optical pickup of the present invention is applied to a multi disk player, is a preferable one example to implement the present invention.

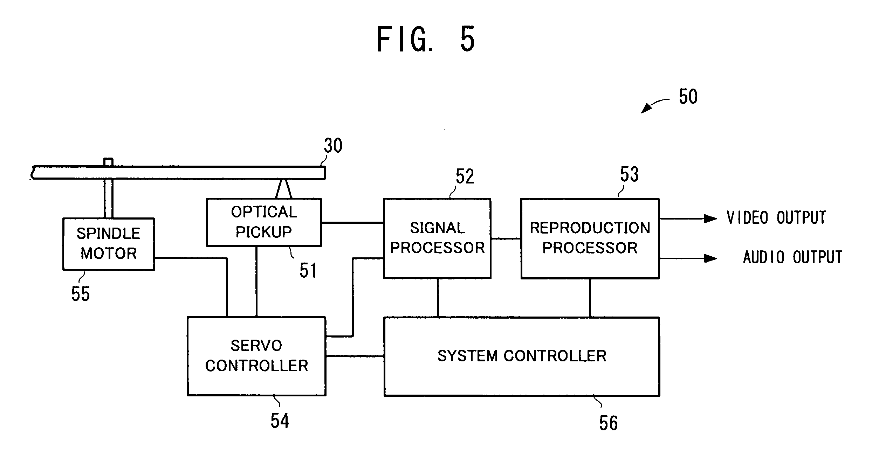

FIG. 5 shows a multi disk player in the example of the present invention. A multi disk player 50 has a function of reproducing information recorded on the four types of recording media, such as the CD, the DVD, the Blu-ray Disc, and the HD-DVD.

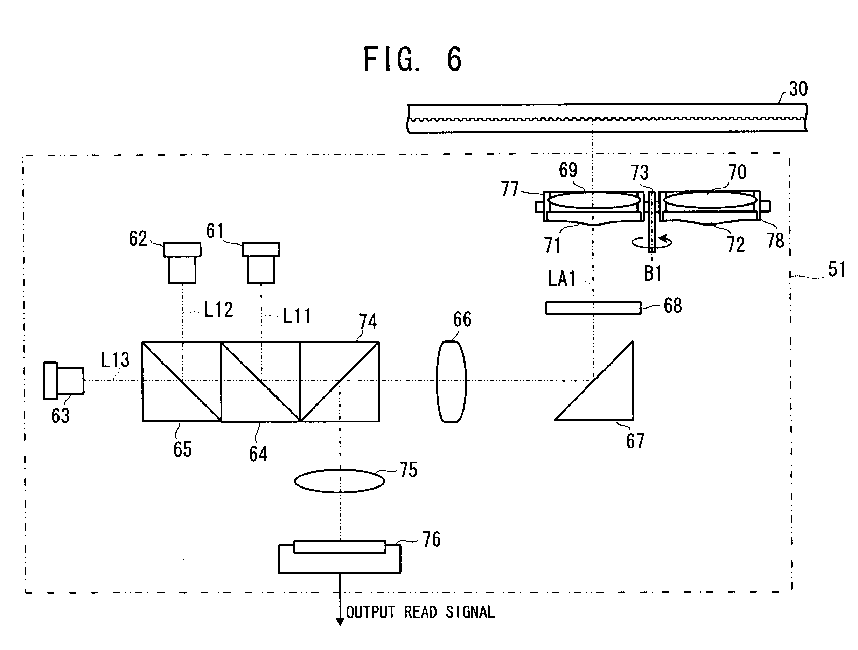

As shown in FIG. 5, the multi disk player 50 is provided with: an optical pickup 51; a signal processor 52; a reproduction processor 53; a servo controller 54; a spindle motor 55; and a system controller 56. The optical pickup 51 reads the information recorded on the CD, the DVD, the Blu-ray Disc, or the HD-DVD (a recording medium 30 in FIG. 5), and outputs a read signal corresponding to the read information, to the signal processor 52. On the basis of the read signal outputted from the optical pickup 51, the signal processor 52 generates a Radio Frequency (RF) signal and a servo control signal. On the basis of the RF signal generated by the signal processor 52, the reproduction processor 53 reproduces the information recorded on the CD, the DVD, the Blu-ray Disc, or the HD-DVD. On the other hand, on the basis of the servo control signal generated by the signal processor 52, the servo controller 54 performs tracking servo and focus servo in the optical pitkup 51, and performs rotation control of the spindle motor 55. The spindle motor 55 controls a rotational speed of the recording medium 30, under the control of the servo controller 54. The system controller 56 performs overall control of the multi disk player 50. In particular, the system controller 56 detects the type of the recording medium 30 mounted on a disk mount (not-illustrated), controls an object lens changing mechanism 73 (refer to FIG. 6) in accordance with the type of the recording medium 30, and controls a changeover between an object lens 69 and an object lens 70.

FIG. 6 shows the internal structure of the optical pickup 51. As shown in FIG. 6, the optical pickup 51 is provided with: three semiconductor lasers 61, 62, and 63; two dichroic prisms 64 and 65; a collimator lens 66; a rising mirror 67; a broadband quarter-wavelength plate 68; the two object lenses 69 and 70; two optical elements 71 and 72; the object lens changing mechanism 73; a deflection beam splitter 74; a detection lens 75; and a photodetector 76.

The semiconductor laser 61 outputs a light beam L11 of a wavelength of 780 nm. This is a light beam used for reproduction of the information recorded on the CD. The semiconductor laser 62 outputs a light beam L12 of a wavelength of 650 nm. This is a light beam used for reproduction of the information recorded on the DVD. The semiconductor laser 63 outputs a light beam L13 of a wavelength of 405 nm. This is a light beam used for reproduction of the information recorded on the Blu-ray Disc or the HD-DVD.

The dichroic prism 64 reflects the light beam L11 and transmits the light beams L12 and L13. The dichroic prism 65 reflects the light beam L12 and transmits the light beam L13. The collimator lens 66 produces a parallel bundle of rays from the light beam L11, L12, or L13. The rising mirror 67 leads the light beam L11, L12, or L13, which is transmitted through the collimator lens 66, to the object lens 69 or 70 side, and leads reflected light to the deflection beam splitter 74 side. By virtue of the dichroic prisms 64 and 65 and the rising mirror 67, the optical axes of the light beams L1 to L3 all match one common optical axis LA1, which extends from the rising mirror 67 to the object lens 69 or 70.

The broadband quarter-wavelength plate 68 functions as a quarter-wavelength plate throughout a broadband from wavelengths of 405 to 780 nm. Namely, the broadband quarter-wavelength plate 68 performs a process of converting linear polarization to circular polarization on the light beams L11, L12, and L13, which is outputted from the semiconductor laser 61, 62, and 63, respectively. Moreover, the broadband quarter-wavelength plate 68 performs a process of converting circular polarization to linear polarization on the reflected light.

The object lens 69 is used in reproduction of the information recorded on the DVD or the Blu-ray Disc. The optical property of the object lens 69 is set not to cause spherical aberration when the light beam L13 is converted on the recording surface of the Blu-ray Disc by the object lens 69. On the other hand, the object lens 70 is used in reproduction of the information recorded on the CD or the HD-DVD. The optical property of the object lens 70 is set not to cause spherical aberration when the light beam L13 is converted on the recording surface of the HD-DVD by the object lens 70.

The optical element 71 is unified with the object lens 69, and has such an optical property that a phase difference distribution is given to the light beam L12 but not given to the light beam L13. Specifically, a plurality of circular steps are formed on a surface of the optical element 71, to transmit the light beam L13 without giving a phase difference distribution thereto, give a phase difference distribution to the light beam L12, and correct spherical aberration caused when the light beam L12 is converged on the recording surface of the DVD only by the object lens 69. Moreover, the optical element 71 is connected and fixed to the object lens 69 via a support member 77.

The optical element 72 is unified with the object lens 70, and has such an optical property that a phase difference distribution is given to the light beam L11 but not given to the light beam L13. Specifically, a plurality of circular steps are formed on a surface of the optical element 72, to transmit the light beam L13 without giving a phase difference distribution thereto, give a phase difference distribution to the light beam L11, and correct spherical aberration caused when the light beam L11 is converged on the recording surface of the CD only by the object lens 70. Moreover, the optical element 72 is connected and fixed to the object lens 70 via a support member 78.

The object lens changing mechanism 73 changes the placement of the object lenses 69 and 70 so as to place either the object lens 69 or the object lens 70 at a predetermined position through which the common optical axis LA1 passes. By rotating around a rotation axis B1, the object lens changing mechanism 73 changes the placement of the object lenses 69 and 70.

The deflection beam splitter 74 transmits the light beam L1, L2, and L3, outputted from the semiconductor laser 61, 62, and 63, respectively, to the object lens 69 or 70 side. At the same time, the deflection beam splitter 74 leads the reflected light, which is obtained by reflection of the light beam on the recording surface of the recording medium 30, to the photodetector 76 side.

The photodetector 76 is provided with a four division light receiving element, for example, and outputs an electric signal corresponding to an intensity distribution of the reflected light inputted through the detection lens 75, as a read signal.

The operation of the optical pickup 51 will be explained below. In reproducing the information recorded on the DVD, the object lens changing device 73 is driven, to place the object lens 69 and the optical element 71 at predetermined positions through which the common optical axis LA1 passes. Then, the semiconductor laser 62 is driven, to output the light beam L12 from semiconductor laser 62. The direction of the light beam L12 is changed by the dichroic prism 65. Then, the light beam L12 is transmitted through the dichroic prism 64, the deflection beam splitter 74, and collimator lens 66. Moreover, the direction of the light beam L12 is changed by the rising mirror 67. By this, the optical axis of the light beam L12 matches the common optical axis LA1. Moreover, the light beam L12 is transmitted through the broadband quarter-wavelength plate 68, the optical element 71, and the object lens 69 in order, and reaches to the recording surface of the DVD (the recording medium 30). The optical property of the object lens 69 is set not to cause spherical aberration when the light beam L13 is converged on the recording surface of the Blu-ray Disc. However, the plurality of circular steps are formed on the surface of the optical element 71, to give a phase difference distribution to the light beam L12, and correct the spherical aberration caused when the light beam L12 is converged on the recording surface of the DVD only by the object lens 69. As a result, the light beam L12, which is transmitted through the optical element 71 and the object lens 69 and reaches to the recording surface to the DVD, can be appropriately converged on the recording surface of the DVD, and the spherical aberration can be controlled in a range appropriate for reproduction of the information recorded on the recording surface of the DVD.

The light beam L12 converged on the recording surface of the DVD is reflected by this recording surface. Then, the reflected light of the light beam L12 is transmitted through the object lens 69, the optical element 71, the broadband quarter-wavelength plate 68, and the like, and reaches to the deflection beam splitter 74. Then, the reflected light is transmitted from the deflection beam splitter 74 to the detection lens 75, inputted to the photodetector 76, and converted to a read signal by the photodetector 76. Then, the read signal is supplied to the signal processor 52.

Next, in reproducing the information recorded on the Blu-ray disc, the object lens changing device 73 is driven, to place the object lens 69 and the optical element 71 at predetermined positions through which the common optical axis LA1 passes. Then, the semiconductor laser 63 is driven, to output the light beam L13 from semiconductor laser 63. The light beam L13 is transmitted through the dichroic prisms 65 and 64, the deflection beam splitter 74, and collimator lens 66. Moreover, the direction of the light beam L13 is changed by the rising mirror 67. By this, the optical axis of the light beam L13 matches the common optical axis LA1. Moreover, the light beam L13 is transmitted through the broadband quarter-wavelength plate 68, the optical element 71, and the object lens 69 in order, and reaches to the recording surface of the Blu-ray Disc (the recording medium 30). The optical property of the object lens 69 is set not to cause spherical aberration when the light beam L13 is converged on the recording surface of the Blu-ray Disc. The optical element 71 transmits the light beam L13 without phase conversion. As a result, the light beam L13, which is transmitted through the optical element 71 and the object lens 69 and reaches to the recording surface to the Blu-ray Disc, can be appropriately converged on the recording surface of the Blu-ray Disc. The light beam L13 converged on the recording surface of the Blu-ray Disc is reflected by this recording surface. Then, the reflected light of the light beam L13 is inputted to the photodetector 76 through the same route as that in the reflected light of the light beam L12, and converted to a read signal by the photodetector 76. Then, the read signal is supplied to the signal processor 52.

Next, in reproducing the information recorded on the CD, the object lens changing device 73 is driven, to place the object lens 70 and the optical element 72 at predetermined positions through which the common optical axis LA1 passes. Then, the semiconductor laser 61 is driven, to output the light beam L11 from semiconductor laser 61. The direction of the light beam L11 is changed by the dichroic prism 64. Then, the light beam L11 is transmitted through the deflection beam splitter 74 and collimator lens 66. Moreover, the direction of the light beam L11 is changed by the rising mirror 67. By this, the optical axis of the light beam L11 matches the common optical axis LA1. Moreover, the light beam L11 is transmitted through the broadband quarter-wavelength plate 68, the optical element 72, and the object lens 70 in order, and reaches to the recording surface of the CD (the recording medium 30). The optical property of the object lens 70 is set not to cause spherical aberration when the light beam L13 is converged on the recording surface of the HD-DVD. However, the plurality of circular steps are formed on the surface of the optical element 72, to give a phase difference distribution to the light beam L11, and correct the spherical aberration caused when the light beam L11 is converged on the recording surface of the CD only by the object lens 70. As a result, the light beam L11, which is transmitted through the optical element 72 and the object lens 70 and reaches to the recording surface to the CD, can be appropriately converged on the recording surface of the CD, and the spherical aberration can be controlled in a range appropriate for reproduction of the information recorded on the recording surface of the CD.

The light beam L11 converged on the recording surface of the CD is reflected by this recording surface. Then, the reflected light of the light beam L11 is transmitted through the object lens 70, the optical element 72, the broadband quarter-wavelength plate 68, and the like, and reaches to the deflection beam splitter 74. Then, the reflected light is transmitted from the deflection beam splitter 74 to the detection lens 75, inputted to the photodetector 76, and converted to a read signal by the photodetector 76. Then, the read signal is supplied to the signal processor 52.

Next, in reproducing the information recorded on the HD-DVD, the object lens changing device 73 is driven, to place the object lens 70 and the optical element 72 at predetermined positions through which the common optical axis LA1 passes. Then, the semiconductor laser 63 is driven, to output the light beam L13 from semiconductor laser 63. The light beam L13 is transmitted through the dichroic prisms 65 and 64, the deflection beam splitter 74, and collimator lens 66. Moreover, the direction of the light beam L13 is changed by the rising mirror 67. By this, the optical axis of the light beam L13 matches the common optical axis LA1. Moreover, the light beam L13 is transmitted through the broadband quarter-wavelength plate 68, the optical element 72, and the object lens 70 in order, and reaches to the recording surface of the HD-DVD (the recording medium 30). The optical property of the object lens 70 is set not to cause spherical aberration when the light beam L13 is converged on the recording surface of the HD-DVD. The optical element 72 transmits the light beam L13 without phase conversion. As a result, the light beam L13, which is transmitted through the optical element 72 and the object lens 70 and reaches to the recording surface to the HD-DVD, can be appropriately converged on the recording surface of the HD-DVD. The light beam L13 converged on the recording surface of the HD-DVD is reflected by this recording surface. Then, the reflected light of the light beam L13 is inputted to the photodetector 76 through the same route as that in the reflected light of the light beam L11, and converted to a read signal by the photodetector 76. Then, the read signal is supplied to the signal processor 52.

As described above, according to the multi disk player 50, it is possible to appropriately converge the light beam L12 on the recording surface of the DVD, and appropriately converge the light beam L13 on the recording surface of the Blu-ray Disc, by using the object lens 69 and the optical element 71 of the optical pickup 51. Moreover, it is possible to appropriately converge the light beam L11 on the recording surface of the CD, and appropriately converge the light beam L13 on the recording surface of the HD-DVD, by using the object lens 70 and the optical element 72. Then, it is possible to record or reproduce the information with respect to the four types of recording media, by using the three types of light beams, by changing the combination of the object lens 69 and the optical element 71 and the combination of the object lens 70 and the optical element 72.

## Claims

1. An optical pickup (1, 51) for reproducing or recording information with respect to a plurality of types of recording media (2), **characterized in that** said optical pickup comprises:
a first light source (3, 61) for outputting a first light beam (L1) of a first wavelength;
a second light source (4, 62) for outputting a second light beam (L2) of a second wavelength;
a third light source (4, 63) for outputting a third light beam (L3) of a third wavelength;
a first object lens (6, 69) and a second object lens (7, 70), having mutually different optical properties;
a first optical element (8, 71), unified with said first object lens, for transmitting either one of said first light beam and said third light beam without changing its optical property, and changing the other's optical property; and
a second optical element (9, 72), unified with said second object lens, for transmitting either one of said second light beam and said third light beam without changing its optical property, and changing the other's optical property.

2. The optical pickup (1, 51) according to claim 1 **characterized in that** said first optical element (8, 71) does not give a phase difference distribution to either one of said first light beam (L1) and said third light beam (L3), but gives a phase difference distribution to the other.

3. The optical pickup (1, 51) according to claim 1 **characterized in that** said first optical element (8, 71) is a hologram element.

4. The optical pickup (1, 51) according to claim 1 **characterized in that** said first optical element (8, 71) is a wavelength-selective aperture limitation element.

5. The optical pickup (1, 51) according to any one of claims 1 to 4 **characterized in that** said first optical element (8, 71) is an optical member different from said first object lens (6, 69) and is connected to said first object lens via a first support member (10, 77).

6. The optical pickup (1, 51) according to any one of claims 1 to 4 **characterized in that** said first optical element (22) is formed on said first object lens (21).

7. The optical pickup (1, 51) according to any one of claims 1 to 6 **characterized in that** said second optical element (9, 72) does not give a phase difference distribution to either one of said second light beam (L2) and said third light beam (L3), but gives a phase difference distribution to the other.

8. The optical pickup (1, 51) according to any one of claims 1 to 6 **characterized in that** said second optical element (9, 72) is a hologram element.

9. The optical pickup (1, 51) according to any one of claims 1 to 6 **characterized in that** said second optical element (9, 72) is a wavelength-selective aperture limitation element.

10. The optical pickup (1, 51) according to any one of claims 1 to 9 **characterized in that** said second optical element (9, 72) is an optical member different from said second object lens (7, 70) and is connected to said second object lens via a second support member (11, 78).

11. The optical pickup (1, 51) according to any one of claims 1 to 9 **characterized in that** said second optical element (22) is formed on said second object lens (21).

12. The optical pickup (1, 51) according to any one of claims 1 to 11 **characterized in that** said optical pickup further comprises:
an optical axis converting device (12, 13, 65, 64) for converting an optical axis of each of said first light beam (L1), said second light beam (L2), and third light beam (L3), to one common optical axis (LA, LA1); and
a changing device (14, 73) for changing placement of said first object lens (6, 69) and said second object lens (7, 70) so as to place either one of said first object lens and said second object lens at a predetermined position through which the common optical axis passes.

13. The optical pickup (1, 51) according to any one of claims 1 to 12 **characterized in that**
the first wavelength of said first light beam (L1) is appropriate for record or reproduction of the information, with respect to a first recording medium having a cover layer of a thickness of T1 and a track pitch of P1,
the second wavelength of said second light beam (L2) is appropriate for record or reproduction of the information, with respect to a second recording medium having a cover layer of a thickness of T2 (T2 < T1) and a track pitch of P2, and
the third wavelength of said third light beam (L3) is appropriate for record or reproduction of the information, with respect to a third recording medium having a cover layer of a thickness of T3 (T3 < T2) and a track pitch of P3 and a fourth recording medium having a cover layer of a thickness of T2 and a track pitch of P4.

14. The optical pickup (1, 51) according to claim 13 **characterized in that**
the first recording medium is a compact disc,
the second recording medium is a DVD, and
the third recording medium is a blu-ray disc.

15. A recording / reproducing apparatus (50) for reproducing or recording information with respect to a plurality of types of recording media (2), **characterized in that** said recording / reproducing apparatus comprises an optical pickup (1, 51) for reproducing or recording the information with respect to the plurality of types of recording media (2), and
said optical pickup comprises:
a first light source (3, 61) for outputting a first light beam (L1) of a first wavelength;
a second light source (4, 62) for outputting a second light beam (L2) of a second wavelength;
a third light source (4, 63) for outputting a third light beam (L3) of a third wavelength;
a first object lens (6, 69) and a second object lens (7, 70), having mutually different optical properties;
a first optical element (8, 71), unified with said first object lens, for transmitting either one of said first light beam and said third light beam without changing its optical property, and changing the other's optical property; and
a second optical element (9, 72), unified with said second object lens, for transmitting either one of said second light beam and said third light beam without changing its optical property, and changing the other's optical property.
